# EUROPÄISCHE PATENTSCHRIFT

(11) **EP 0 839 294 B1**
(45) Veröffentlichungstag und Bekanntmachung des Hinweises auf die Patenterteilung: **22.12.1999**
(21) Anmeldenummer: 97923013.3
(22) Anmeldetag: 07.05.1997
(51) Int. Cl.: F16H 27/04, B23Q 16/06

(54) **SCHRITTGETRIEBE**
STEP-BY-STEP GEARING MECHANISM
MECANISME PAS A PAS

(30) Priorität: 15.05.1996 DE 19619809
(43) Veröffentlichungstag der Anmeldung: 06.05.1998
(73) Patentinhaber: Traub Drehmaschinen GmbH, 73262 Reichenbach (DE)
(72) Erfinder: BAUMANN, Ulrich, D-73252 Lenningen (DE)
(74) Vertreter: Goetz, Rupert, Dipl.-Ing.
(86) Internationale Anmeldenummer: EP9702350
(87) Internationale Veröffentlichungsnummer: WO9743565

(56) Entgegenhaltungen:
- GB-A- 1 351 082
- GB-A- 2 041 148
- GB-A- 2 071 805
- US-A- 2 986 949
- US-A- 3 590 661

## Beschreibung

Die Erfindung betrifft ein Schrittgetriebe nach dem Oberbegriff des Anspruchs 1.

Bei einem bekannten Schrittgetriebe dieser Gattung (GB 1 260 928) wirkt ein Rollenträger mit zwei an sich gleichen, jedoch in bezug zueinander spiegelbildlich angeordneten Kurvenscheiben zusammen. Von diesen hat jede einen zu ihrer Drehachse konzentrischen Haltebereich, der sich ununterbrochen über ungefähr 250° erstreckt, sowie einen an einem Vorsprung ausgebildeten Bewegungsbereich und eine Mulde, die sich über je ungefähr 55° erstrecken. Bei einer ersten dieser beiden Kuvenscheiben folgt auf den Haltebereich erst der Vorsprung mit dem Bewegungsbereich und dann die Mulde; bei der zweiten Kurvenscheibe ist es umgekehrt. Bei einer von einem gemeinsamen Antriebsrad hervorgerufenen gleichsinnigen Drehung der beiden Kurvenscheiben um je 360° nimmt zunächst der Vorsprung der ersten Kurvenscheibe eine erste Rolle des Rollenträgers mit, während die auf sie folgende zweite Rolle von keiner Kurvenscheibe berührt wird, die dritte Rolle in die Mulde der zweiten Kurvenscheibe eintaucht und die vierte Rolle ebenfalls von keiner Kurvenscheibe berührt wird. Sobald die dritte Rolle das Ende der Mulde der zweiten Kurvenscheibe erreicht hat, wird sie von dem Vorsprung mitgenommen, während die erste Rolle von der ersten Kurvenscheibe freigegeben wird und deren Mulde die zweite Rolle aufnimmt. Schließlich wird die dritte Rolle von der zweiten Kurvenscheibe freigegeben und die zweite sowie die vierte Rolle liegen am Haltebereich je einer der Kurvenscheiben an, so daß der Rollenträger nach einer Vierteldrehung am Weiterdrehen gehindert ist, bis die beiden Kurvenscheiben eine volle Umdrehung ausgeführt haben.

Bei diesem bekannten Schrittgetriebe ist also die Anzahl der Schaltstellungen, die ein mit dem Rollenträger verbundener Revolver oder dergleichen einnehmen kann, mit der Anzahl der Rollen am Rollenträger identisch. Schon bei nur vier Schaltstellungen hat dies zur Folge, daß an einem Rollenträger vorgegebenen Außendurchmessers nur verhältnismäßig kleine Rollen untergebracht werden können; erst recht gilt dies, wenn sechs oder mehr Schaltstellungen verlangt werden und deshalb eine entsprechend große Anzahl Rollen erforderlich ist. Wegen ihrer somit knappen Dimensionierung können die Rollen nicht mit besonders hohen Kräften belastet werden, wie sie erforderlich sind, um den Rollenträger gegen die Einwirkung eines großen äußeren Drehmoments sicher festzuhalten. Äußere Drehmomente in erheblicher Größe treten beispielsweise auf, wenn das Schrittgetriebe zum Antreiben eines Revolvers einer Drehmaschine vorgesehen ist, der in jeder seiner Schaltstellungen nur durch das Schrittgetriebe am Drehen gehindert, also nicht durch eine zusätzliche Vorrichtung verriegelt ist.

Der Erfindung liegt die Aufgabe zugrunde, ein Schrittgetriebe, das sich insbesondere zum Schalten von Revolvern an Drehmaschinen oder dgl. eignet, derart weiterzubilden, daß es bei gegebener Größe der Kurvenscheiben und des Rollenträgers geeignet ist, besonders hohen von außen auf den Rollenträger einwirkenden Drehmomenten sicher standzuhalten.

Die Aufgabe ist erfindungsgemäß mit den Merkmalen des Anspruchs 1 gelöst. Vorteilhafte Weiterbildungen ergeben sich aus den Unteransprüchen.

Mit der Erfindung wird erreicht, daß die Anzahl der erforderlichen Rollen am Rollenträger nur halb so groß ist wie die Anzahl der Schaltstellungen, in denen der Rollenträger - und somit ein mit ihm verbundener Revolver od. dgl. - im Laufe jeder vollen Umdrehung festgehalten wird. Deshalb kann jede einzelne Rolle einen verhältnismäßig großen Durchmesser aufweisen und mit entsprechend großen Kräften belastet werden.

Ein Ausführungsbeispiel der Erfindung wird im folgenden anhand schematischer Zeichnungen mit weiteren Einzelheiten erläutert. In den Zeichnungen zeigen:
- Fig. 1: ein erfindungsgemäßes Schrittgetriebe in perspektivischer Ansicht bei geöffnetem und teilweise aufgebrochen dargestelltem Gehäuse,
- Fig.2a: die axiale Ansicht in Richtung des Pfeils II in Fig.1 während einer ersten Stillstandsphase des Getriebes,
- Fig.2b: die entsprechende Ansicht während einer ersten Beschleunigungsphase,
- Fig.2c: die entsprechende Ansicht während einer ersten Verzögerungsphase,
- Fig.2d: die entsprechende Ansicht während einer zweiten Stillstandsphase,
- Fig.2e: die entsprechende Ansicht während einer zweiten Beschleunigungsphase
- Fig.2f: die entsprechende Ansicht während einer zweiten Verzögerungsphase,
- Fig.3: den Schnitt III-III in Fig.2a.
- Fig.4: den Schnitt IV-IV in Fig.2d
- Fig.5: eine axiale Ansicht einer Kurvenscheibe und
- Fig.6: die Seitenansicht in Richtung des Pfeils VI in Fig.5.

In den Zeichnungen ist ein Schrittgetriebe 10 zum Antreiben eines Werkzeugrevolvers 12 dargestellt, der sechs Schaltstellungen aufweist und dementsprechend mit sechs Werkzeughaltern 14 für je ein Drehwerkzeug 16 oder einen oder mehrere Bohrer 18 oder andere Bearbeitungswerkzeuge ausgerüstet ist.

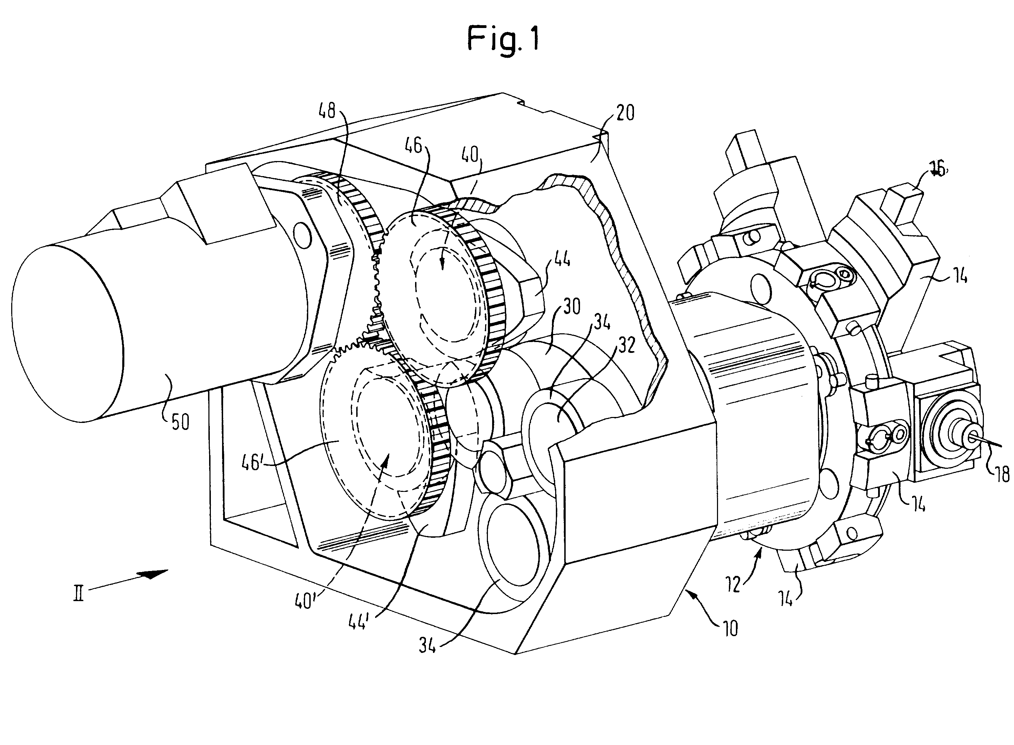

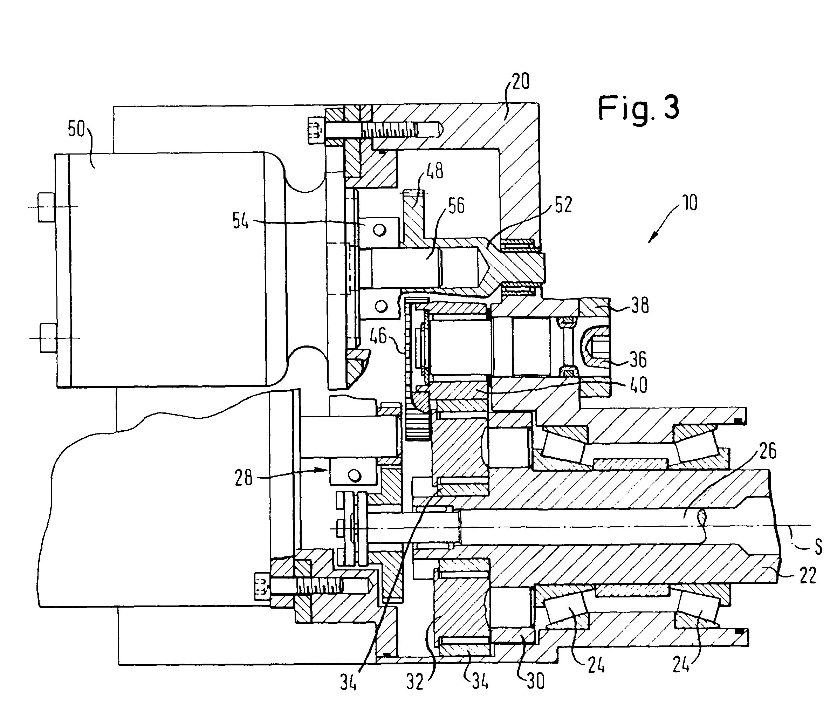

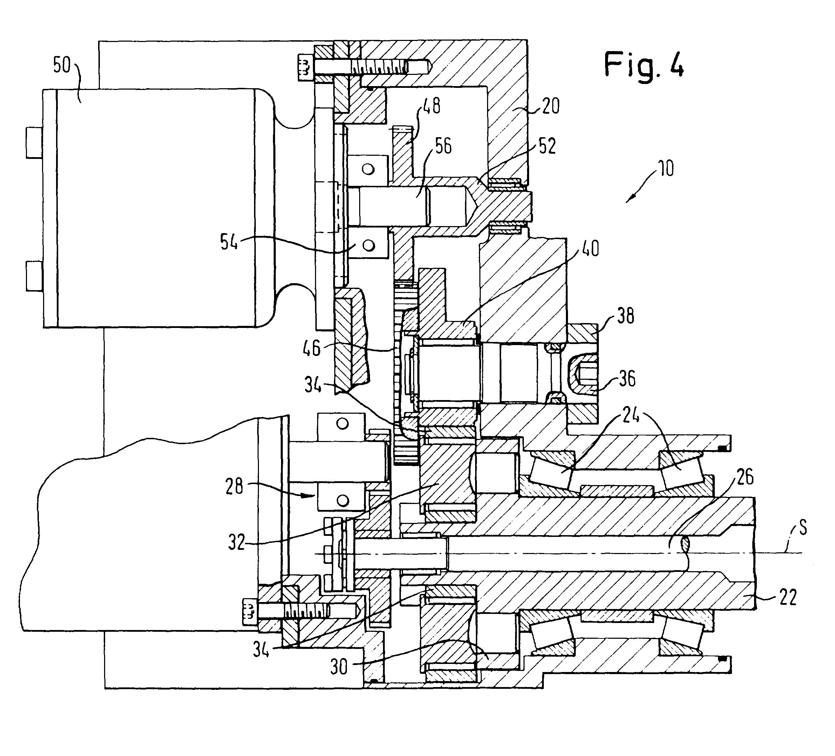

Das Schrittgetriebe 10 hat ein Gehäuse 20, das beispielsweise auf einem Oberschlitten einer Kreuzschlittenanordnung befestigt werden kann. Im Gehäuse 20 ist eine Schaltwelle 22 mittels Kegelrollenlagern 24 um eine Schaltachse S drehbar gelagert. Die Schaltwelle 22 trägt den Werkzeugrevolver 12 und ist als Hohlwelle ausgebildet, in der eine Antriebswelle 26 für drehantreibbare Werkzeuge, beispielsweise den in Fig.1 dargestellten Bohrer 18, gelagert ist. Die Antriebswelle 26 ist in üblicher Weise über ein Untersetzungsgetriebe 28 von einem nicht dargestellten Motor antreibbar. Der in Fig.1, 3 und 4 linke Endbereich der Schaltwelle 22 ist als Rollenträger 30 mit drei in gleichen Winkelabständen von 120° rings um die Schaltachse S angeordneten Zapfen 32 ausgebildet. Auf jedem der drei Zapfen 32 ist eine Rolle 34 um eine zur Schaltachse S parallele Rollenachse R drehbar gelagert. Die drei Rollen 34 haben gleiche Abstände von der Schaltachse S und liegen in einer Reihe, d.h. sie sind durch Drehen der Schaltwelle 22 gegeneinander austauschbar.

In gleichen Abständen von der Schaltachse S, und in einem ungefähr ebensogroßen Abstand voneinander, sind im Gehäuse 20 zwei Achsstummel 36 und 36' gelagert, die eine kleine Exzentrizität aufweisen und mittels je einer Klemmplatte 38 in einer gewählten Winkelstellung festklemmbar sind. Auf den beiden Achsstummeln 36 und 36' ist je eine Kurvenscheibe 40 bzw. 40' um eine zur Schaltachse S und zu den Rollenachsen R parallele Drehachse K bzw K' drehbar gelagert. Die genaue Lage der Drehachsen K und K' läßt sich durch Verdrehen des zugehörigen exzentrischen Achsstummels 36 bzw. 36' einstellen und durch anschließendes Festsetzen der zugehörigen Klemmplatte 38 fixieren. Jede der beiden Kurvenscheiben 40 und 40' hat einen im wesentlichen kreisförmigen Kern 42 bzw. 42' von gleicher in axialer Richtung gemessener Breite wie die Rollen 34 und einen radial nach außen ragenden Vorsprung 44 bzw. 44' von halber Breite.

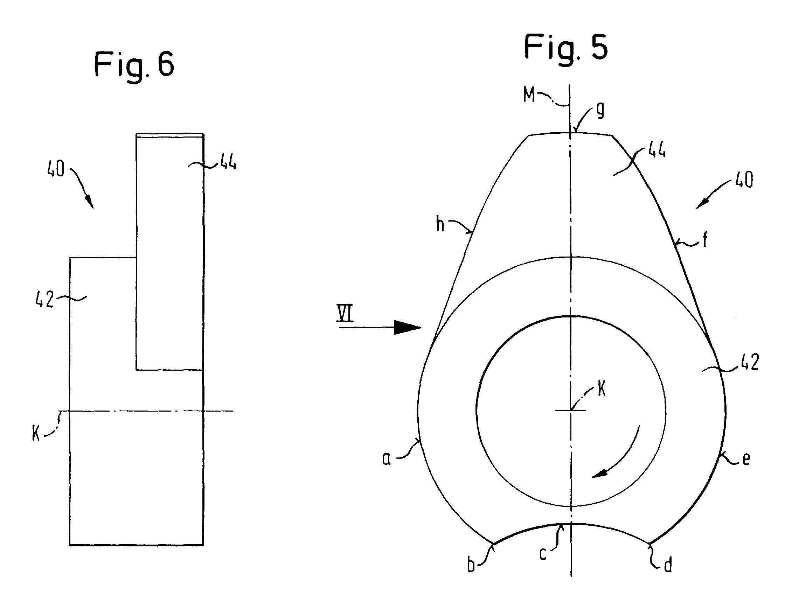

In Fig.5 und 6 ist die Kurvenscheibe 40 einzeln dargestellt. Sie ist symmetrisch in bezug auf eine Mittelebene M. Ihr Kern 42 hat einen bei Drehung in Pfeilrichtung voraneilenden oder vorderen Halteabschnitt a, der exakt kreiszylindrisch ist und die Drehachse K als Krümmungsachse hat. Der Halteabschnitt a endet an einer Stelle b, von der aus der Kern 42 einen allmählich abnehmenden Abstand von der Drehachse K hat, so daß dort eine zentrale Mulde c beginnt. Entsprechend der Symmetrie zur Mittelebene M nimmt der Abstand von der Drehachse K bis zu einer Stelle d wieder allmählich zu, und darauf folgt ein weiterer kreiszylindrischer Halteabschnitt e. Daran schließt sich der Vorsprung 44 mit einem Bewegungsbereich an, der mit einer steilen vorderen Flanke f beginnt, sich in einem kreiszylindrischen Abschnitt g fortsetzt und in einer steilen rückwärtigen Flanke h endet.

Die Kurvenscheibe 40' ist der Kurvenscheibe 40 vollständig gleich, jedoch auf ihren Achsstummel 36' so aufgesteckt, daß ihr Vorsprung 44' gemäß Fig.1, 4 und 5 links angeordnet ist, während der Vorsprung 44 der Kurvenscheibe 40 rechts liegt. Infolgedessen sind die Vorsprünge 44 und 44' einander überlappend aneinander vorbeibewegbar, obwohl die beiden Kurvenscheiben 40 und 40' als Ganzes nicht gegeneinander axial versetzt sind.

Jede der beiden Kurvenscheiben 40 und 40' ist mit einem zur zugehörigen Drehachse K bzw. K' konzentrischen Zwischenrad 46 bzw. 46' zu gemeinsamer Drehung verbunden. Die beiden Zwischenräder 46 und 46' sind gleich groß und im dargestellten Beispiel als Stirnzahnräder ausgebildet; sie kämmen mit einem ebensogroßen Antriebsrad 48, dessen Achse in einer winkelhalbierenden Ebene W liegt, welche die Schaltachse S enthält und von den beiden Drehachsen K und K' der Kurvenscheiben 40 und 40' gleich weit entfernt ist. Das Antriebsrad 48 wird von einem Antrieb 50, beispielsweise einem Ölmotor, angetrieben; im dargestellten Beispiel geschieht dies dadurch, daß das Antriebsrad 48 mit einer Hohlwelle 52 einstückig ausgebildet ist, die mittels einer Klemmvorrichtung 54 mit der Welle 56 des Antriebs 50 drehmomentübertragend verbunden ist.

Über das Schrittgetriebe 10 wird der Rollenträger 30, und somit auch der Werkzeugrevolver 12, schrittweise um jeweils 60° gedreht und in den Stillstandsphasen derart sicher und genau stillgesetzt, daß es einer zusätzlichen Verriegelung des Werkzeugrevolvers 12 nicht bedarf, obwohl damit zu rechnen ist, daß beim Einsatz bestimmter Werkzeuge, beispielsweise des dargestellten Drehwerkzeugs 16, erhebliche Drehmomente auf den Werkzeugrevolver 12, und somit auch auf den Rollenträger 30 einwirken.

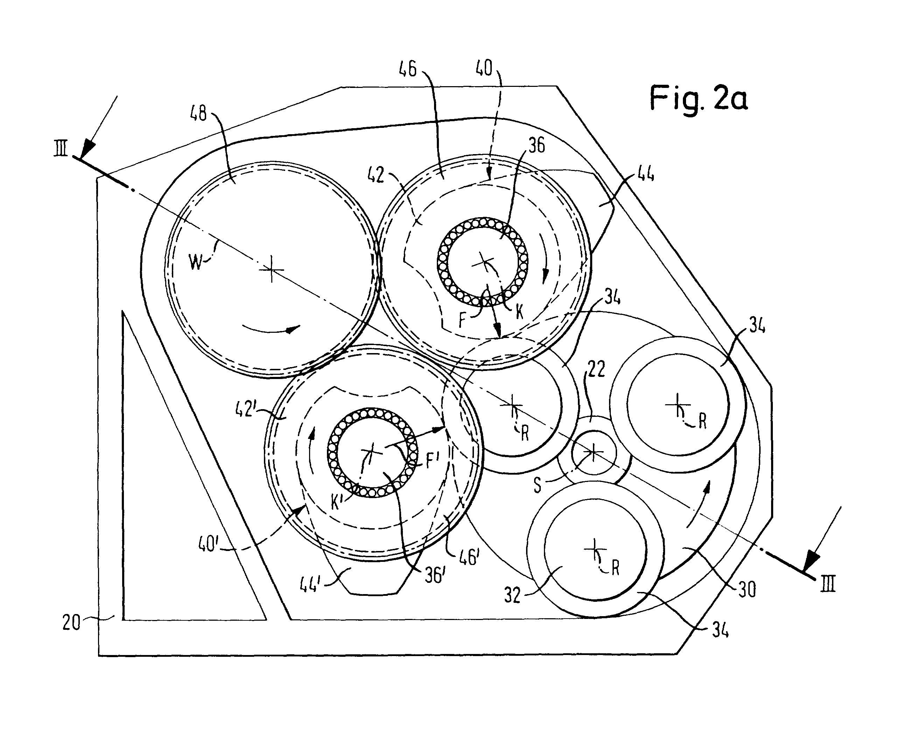

Der Bewegungsablauf des Schrittgetriebes 10 während eines Schrittes ist in Fig.2a bis 2f dargestellt:

Gemäß Fig.2a liegen beide Kurvenscheiben 40 und 40' mit je einem kreiszylindrischen Halteabschnitt a bzw. e ihres Kerns 42 bzw. 42' an einer und derselben Rolle 34 an und üben auf sie je eine Kraft F bzw. F' aus, deren Wirkungslinie einen erheblichen Abstand von der Schaltachse S hat. Es genügen also verhältnismäßig geringe Kräfte F und F', um auf den Rollenträger 30 einander entgegengesetzte Drehmomente auszuüben, die ausreichen, um den Werkzeugrevolver 12 bei allen vorkommenden Belastungen mit Sicherheit an jeglicher Drehung zu hindern. Die genannte Rolle 34 ist in einer Stellung, in der ihre Rollenachse R in der winkelhalbierenden Ebene W liegt. Nun wird der Antrieb 50 eingeschaltet, so daß die beiden Kurvenscheiben 40 und 40' über das Antriebsrad 48 gleichsinnig im Sinne der eingezeichneten Pfeile gedreht werden, wobei der Rollenträger 30 zunächst noch in seiner Stellung verharrt.

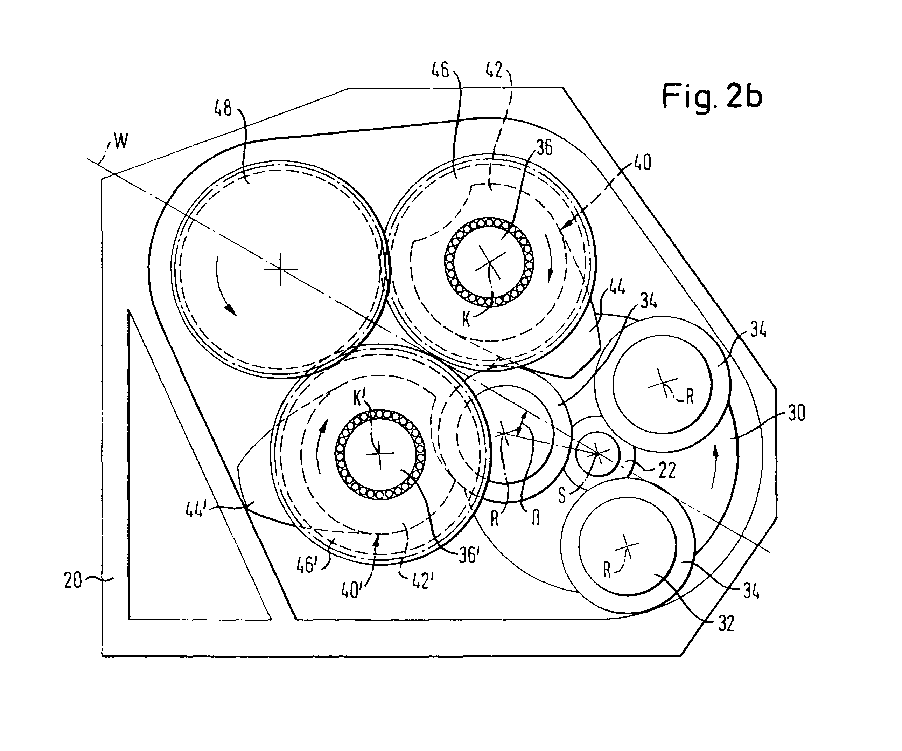

In Fig.2b haben die beiden Kurvenscheiben 40 und 40' je eine Stellung erreicht, in der sie begonnen haben, den Rollenträger 30 in Pfeilrichtung zu beschleunigen; die Kurvenscheibe 40 wirkt mit der steilen vorderen Flanke f ihres Vorsprungs 44 auf die genannte Rolle 34 ein, während die Mulde c im Kern 42' der Kurvenscheibe 40' der selben Rolle 34 Raum bietet, sie aber zugleich daran hindert, sich von der Kurvenscheibe 40 zu entfernen. Die genannte Rolle 34 bleibt also noch zwischen den beiden Kurvenscheiben 40 und 40' formschlüssig festgehalten, während der Rollenträger 30 sich aus seiner Ausgangsstellung um den Winkel β gedreht hat.

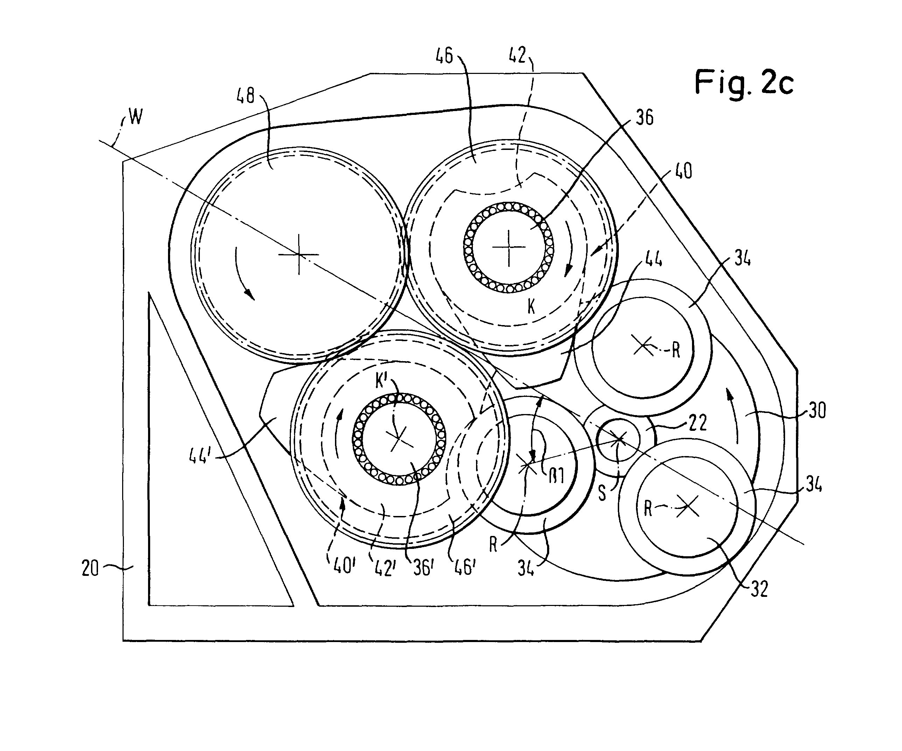

Gemäß Fig.2c wird die genannte Rolle 34 nur noch von der Kurvenscheibe 40', nämlich von deren Kern 42', berührt, nachdem der Rollenträger 30 sich aus seiner Ausgangsstellung um den Winkel β1 gedreht hat. Die Kurvenscheibe 40 liegt mit der steilen rückwärtigen Flanke h ihres Vorsprungs 44 an der nächstfolgenden, nun oberen, Rolle 34 an und verlangsamt die Drehbewegung des Rollenträgers 30, und somit des Werkzeugrevolvers 12. Diese Anlage des Vorsprungs 44 an der in Fig.2c oberen Roll 34 hat begonnen, ehe die vorangehende, nun links unten angeordnete Rolle 34 den Kontakt mit dem Vorsprung 44 verloren hat. Der Rollenträger 30 wird also von den beiden Kurvenscheiben 40 und 40' ununterbrochen formschlüssig geführt, so daß er sich auch in der Verzögerungsphase nicht unkontrolliert drehen kann.

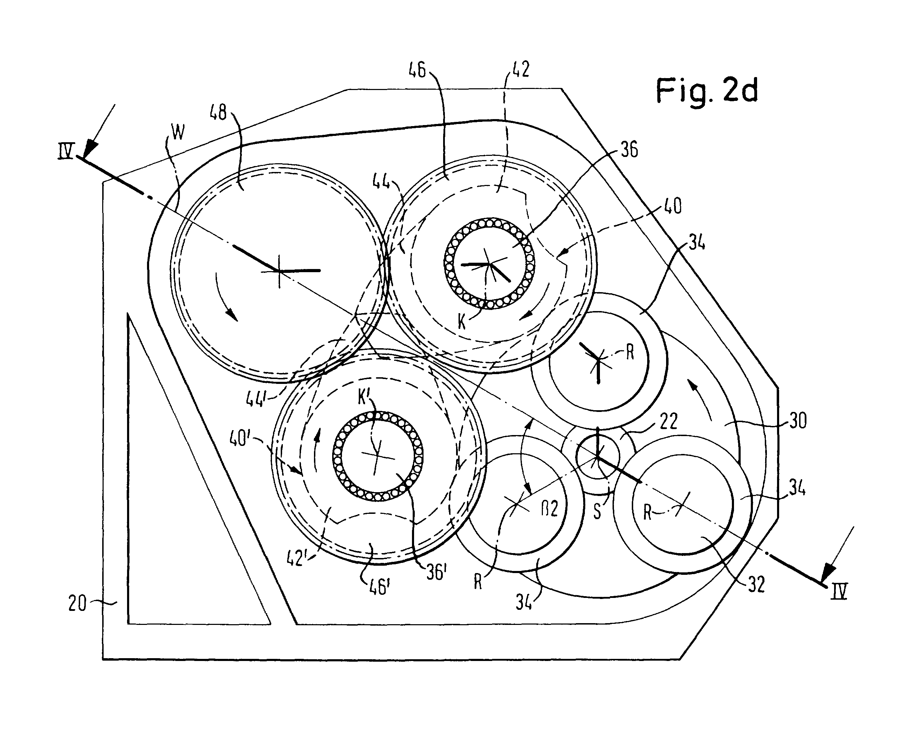

In Fig.2d ist die nächste Stillstandsphase erreicht, nachdem der Rollenträger 30 sich um 60° gedreht hat, also um den halben Winkelabstand β2 zwischen zwei benachbarten Rollen 34. Währenddessen haben sich die beiden Kurvenscheiben 40 und 40' gegenüber der in Fig.2a abgebildeten ersten Stillstandsphase um je 180° gedreht. Nun liegt wieder eine Rollenachse R, diesmal die von den Kurvenscheiben 40 und 40' am weitesten entfernte, in der winkelhalbierenden Ebene W. Gemäß Fig.2d wirken die beiden Kurvenscheiben 40 und 40' noch immer auf die beiden gleichen Rollen 34 ein wie in Fig.2c; auch diesmal geschieht die Einwirkung durch je einen kreiszylindrischen Halteabschnitt a bzw. e der Kerne 42 und 42', so daß der Rollenträger 30 gegen Drehen festgehalten wird, auch wenn die Kurvenscheiben 40 und 40' sich weiter drehen.

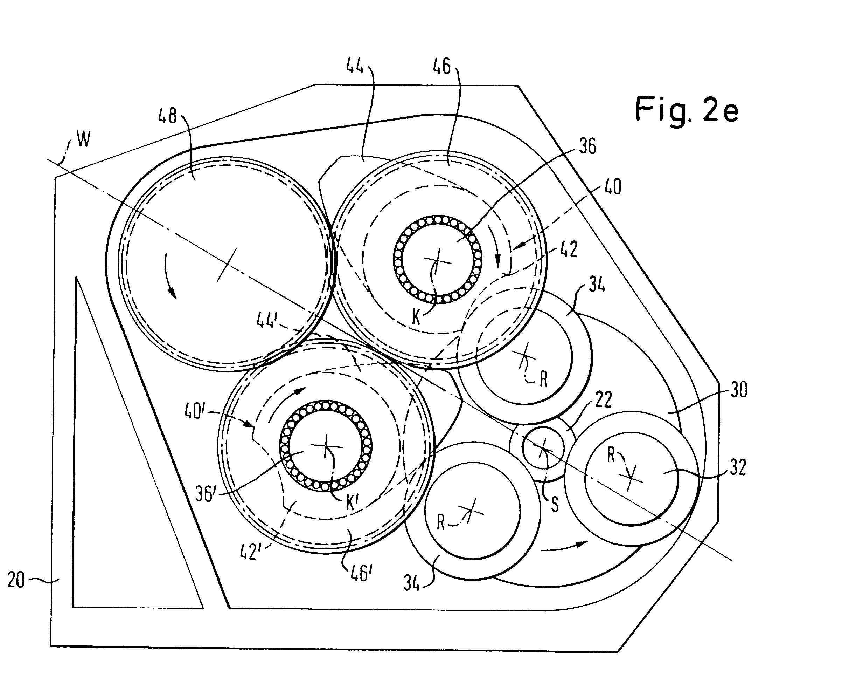

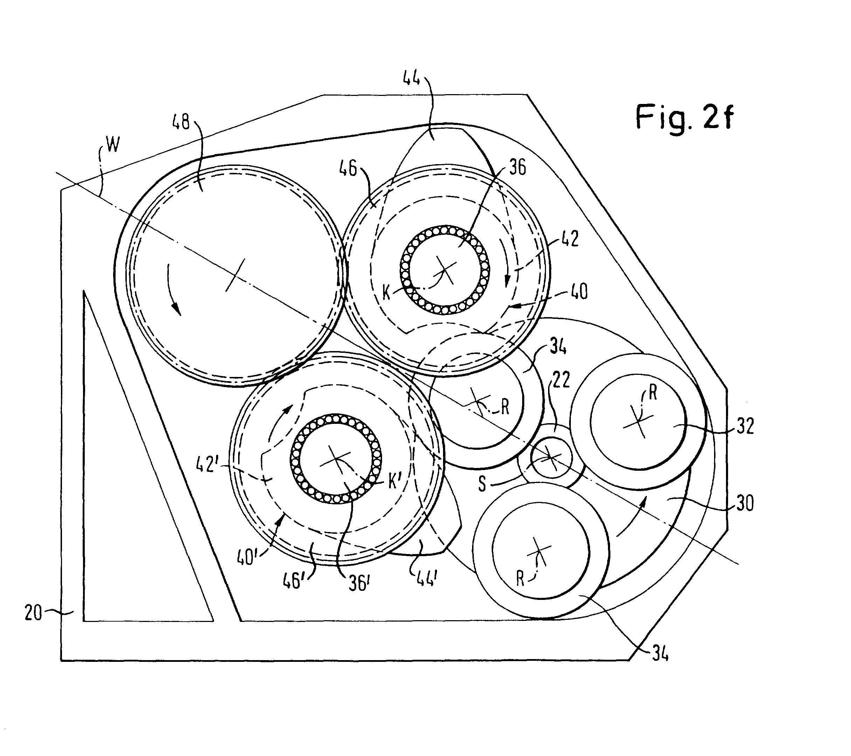

Wenn die beiden Kurvenscheiben 40 und 40' sich ein Stück weit über die in Fig.2d abgebildete Stellung hinaus gedreht haben, beginnt der nächste Schaltschritt. Dabei verlagert sich die Berührung der Kurvenscheibe 40 mit der in Fig.2d oberen Rolle 34 allmählich in die Mulde c in ihrem Kern 42, während die Kurvenscheibe 40' mit der vorderen Flanke f ihres Vorsprungs 44' auf die in Fig.2d links unten angeordnete Rolle 34 einwirkt, so daß der Rollenträger 30, und somit der Werkzeugrevolver 12, in der ursprünglichen Drehrichtung zunächst gemäß Fig. 2e erneut beschleunigt und dann gemäß Fig. 2f wieder abgebremst wird. So gelangt das Schrittgetriebe 10 über die in Fig. 2e und Fig. 2f abgebildeten Stellungen schließlich wieder in die Ausgangsstellung gemäß Fig. 2a.

Die in Fig.2a abgebildete Stellung wird also wieder erreicht, wenn der Rollenträger 30, und somit der Werkzeugrevolver 12, sich um 120° gedreht hat, also nach zwei Schaltschritten. Währenddessen haben die beiden Kurvenscheiben 40 und 40', ausgehend von ihrer in Fig.2a abgebildeten ursprünglichen Stellung, je eine volle Umdrehung ausgeführt.

Bei jeder vollen Umdrehung der beiden Kurvenscheiben 40 und 40' bewegen sich deren Vorsprünge 44 und 44' einmal in der aus Fig.2e und Fig. 2f ersichtlichen Weise aneinander vorbei. Damit dies kollisionsfrei möglich ist, ohne daß die Kurvenscheiben 40 und 40' insgesamt axial gegeneinander versetzt angeordnet sind, ist die in axialer Richtung gemessene Breite der beiden Kurvenscheiben 40 und 40' an ihren Vorsprüngen 44 und 44' im Verhältnis zu den Kernen 42 und 42' auf knapp die Hälfte vermindert und die beiden Vorsprünge 44 und 44' sind entsprechend axial gegeneinander versetzt angeordnet. Obwohl die somit verhältnismäßig schmalen Vorsprünge 44 und 44' für die Beschleunigung und Verzögerung des Rollenträgers 30 sowie der gesamten trägen Masse des Werkzeugrevolvers 12 und der an ihm angeordneten Werkzeughalter 14 und Werkzeuge 16 und 18 zuständig sind, werden zulässige Flächenpressungen bei der Einwirkung der Vorsprünge 44 und 44' auf die Rollen 34 nicht überschritten. Wesentlich ist, daß die Kerne 42 und 42' in axialer Richtung zumindest annähernd ebensobreit sind wie die Rollen 34, und mit diesen auch im wesentlichen auf ihrer gesamten Breite zusammenwirken, denn die größten vorkommenden Kräfte sind die zum Festhalten des Werkzeugrevolvers 12 erforderlichen, und diese werden ausschließlich von den Kernen 42 und 42' auf jeweils eine der Rollen 34 (Fig.2a) oder auf zwei benachbarte Rollen 34 (Fig.2d) übertragen.

Da für sechs Schaltschritte des Rollenträgers 30 nur insgesamt rei Rollen 34 erforderlich sind, können die Rollendurchmesser verhältnismäßig groß bemessen, und somit die Flächenpressungen auch bei Einwirkung großer Kräfte gering gehalten werden.

## Patentansprüche

1. Schrittgetriebe, insbes. zum Schalten eines Revolvers (12) an einer Werkzeugmaschine, mit
- einem Rollenträger (30), der um eine Schaltachse (S) drehbar ist, und an dem Rollen (34) in Winkelabständen rings um die Schaltachse (S) derart gelagert sind, daß ihre Positionen durch Drehen des Rollenträgers (30) gegeneinander austauschbar sind,
- zwei Kurvenscheiben (40, 40'), die um je eine eigene Drehachse (K, K') drehbar gelagert und gleichsinnig drehantreibbar sind, und von denen jede gebildet ist von
-- einem Kern (42, 42'), der einen zur Drehachse (K, K') der betreffenden Kurvenscheibe (40, 40') konzentrischen Haltebereich (a, e) und eine Mulde (c) aufweist, und
-- einem Vorsprung (44, 44'), der einen Bewegungsbereich (f, h) aufweist, und mit
- einer Anordnung der Kurvenscheiben (40, 40') in bezug auf den Rollenträger (30), bei der
-- die Haltebereiche (a, e) beider Kurvenscheiben (40, 40') gleichzeitig und einander entgegenwirkend an je eine Rolle (34) anlegbar sind, wodurch der Rollenträger (30) am Vorwärts- und Rückwärtsdrehen gehindert ist (Fig. 2d), und
-- der Bewegungsbereich (f, h) jeweils einer der Kurvenscheiben (40, 40') an eine der Rollen (34) anlegbar ist, während eine andere der Rollen (34) in die Mulde (c) der anderen Kurvenscheibe (40', 40) eintaucht, so daß der Rollenträger (30) gedreht wird,
dadurch gekennzeichnet, daß
- die Kurvenscheiben (40, 40') einander derart benachbart angeordnet und ihre Vorsprünge (44, 44') einander überlappend derart aneinander vorbei bewegbar sind, daß im Wechsel mit den genannten Anlageverhältnissen
-- die Haltebereiche (a, e) beider Kurvenscheiben (40, 40') gleichzeitig und einander entgegenwirkend an eine und dieselbe Rolle (34) anlegbar sind, wodurch der Rollenträger (30) wiederum am Vorwärts- und Rückwärtsdrehen gehindert ist (Fig. 2a), und
-- der Bewegungsbereich (f, h) jeweils einer Kurvenscheibe (40, 40') an eine der Rollen (34) anlegbar ist, während dieselbe Rolle (34) in die Mulde (c) der anderen Kurvenscheibe (40', 40) eintaucht, so daß der Rollenträger (30) wieder gedreht wird (Fig. 2b, Fig. 20c).

2. Schrittgetriebe nach Anspruch 1,
dadurch gekennzeichnet, daß nur der Kern (42, 42') jeder der Kurvenscheiben (40, 40') in seiner axialen Breite und Lage ungefähr mit den Rollen (34) übereinstimmt, während die Vorsprünge (44, 44') in axialer Richtung je ungefähr halb so breit und entsprechend axial gegeneinander versetzt sind.

3. Schrittgetriebe nach Anspruch 1 oder 2,
dadurch gekennzeichnet, daß jede der Kurvenscheiben (40, 40') in bezug auf eine axiale Mittelebene (M) symmetrisch ist, wobei ihr Haltebereich (a, e) unterteilt ist in einen vorderen Halteabschnitt (a) und einen hinteren Halteabschnitt (e), die einerseits durch die Mulde (c) und andererseits durch den Bewegungsbereich (f, h) miteinander verbunden sind.

4. Schrittgetriebe nach Anspruch 3,
dadurch gekennzeichnet, daß die beiden Kurvenscheiben (40, 40') gleich sind und ihre Drehachsen (K, K') von der Schaltachse (S) gleich weit entfernt sind.

5. Schrittgetriebe nach einem der Ansprüche 1 bis 4,
dadurch gekennzeichnet, daß die Drehachsen (K, K') der beiden Kurvenscheiben (40, 40') von je einem exzentrisch gelagerten, dreheinstellbaren Achsstummel (36) definiert sind.

## Claims

1. A stepping gear mechanism, especially for motion control of a machine tool turret (12), comprising
- a roller supporting member (30) which is rotatable about a shift axis (S) and supports rollers (34) angularly spaced around the shift axis (S) in such a manner that their positions are interchangeable by rotation of the roller supporting member (30),
- two cam plates (40, 40') each supported for rotary movement about an axis of rotation (K, K') of their own and so as to be driven in rotation in the same sense, and each being composed of
-- a core (42, 42') including a stop zone (a, e) which is concentric with the axis of rotation (K, K') of the respective cam plate (40, 40') and an indentation (c), and
-- a projection (44, 44') including a motion zone (f, h), and further comprising
- an arrangement of the cam plates (40, 40') with respect to the roller supporting member (30) with which
-- the stop zones (a, e) of both cam plates (40, 40') are adapted to enter into simultaneous and counteracting engagement with a roller (34) each, whereby the roller supporting member (30) is prevented from rotating forwardly and backwardly (fig. 2d), and
-- the motion zone (f, h) of one of the cam plates (40, 40') each is adapted to enter into engagement with one of the rollers (34), while another one of the rollers (34) dips into the indentation (c) of the other cam plate (40', 40) so that the roller supporting member (30) is rotated,
characterized in that
- the cam plates (40, 40') are disposed adjacent each other in such manner and their projections (44, 44') are movable past each other in overlapping relationship in such manner that, alternating with the conditions of engagement mentioned,
-- the stop zones (a, e) of both cam plates (40, 40') are adapted to engage one and the same roller (34) simultaneously and opposingly, whereby the roller supporting member (30) once more is prevented from rotating forwardly and backwardly (fig. 2a), and
-- the motion zone (f, h) of one of the cam plates (40, 40') each is adapted to engage one of the rollers (34) while the same roller (34) dips into the indentation (c) of the other cam plate (40', 40) so that the roller supporting member (30) is rotated again (fig. 2b, fig. 20c).

2. The stepping gear mechanism as claimed in claim 1,
characterized in that only the core (42, 42') of each of the cam plates (40, 40') conforms approximately with the rollers (34) in its axial width and position, while the projections (44, 44') each are approximately half as wide in axial direction and mutually offset accordingly in axial direction.

3. The stepping gear mechanism as claimed in claim 1 or 2,
characterized in that each of the cam plates (40, 40') is symmetrical with respect to an axial center plane (M), its stop zone (a, e) being divided into a front stop portion (a) and a rear stop portion (e), the portions being interconnected, on the one hand, by the indentation (c) and, on the other hand, by the motion zone (f, h).

4. The stepping gear mechanism as claimed in claim 3,
characterized in that the two cam plates (40, 40') are identical and their axes of rotation (K, K') are located at identical distances from the shift axis (S).

5. The stepping gear mechanism as claimed in any one of claims 1 to 4,
characterized in that the axes of rotation (K, K') of the two cam plates (40, 40') each are defined by an eccentrically supported, rotatably adjustable axle journal (36).

## Revendications

1. Mécanisme pas à pas, en particulier pour commuter un revolver (12) sur une machine outil, comportant :
- un support de rouleaux (30) qui est en rotation autour d'un axe de commutation (S) et sur lequel sont montés des rouleaux (34) à des distances angulaires tout autour de l'axe de commutation (S), de telle sorte que leurs positions sont interchangeables les unes avec les autres par rotation du support de rouleaux (30),
- deux disques à came (40, 40') qui sont montés chacun en rotation autour d'un axe de rotation propre (K, K') et susceptibles d'être entraînés dans le même sens, et dont chacun est formé par :
-- un noyau (42, 42') qui présente une zone de maintien (a, e) concentrique à l'axe de rotation (K, K') du disque à came correspondant (40, 40') et une cavité (c), et par
-- une saillie (44, 44') qui présente une zone de mouvement (f, h),
et comportant :
- un agencement des disques à came (40, 40') par rapport au support de rouleaux (30), dans lequel :
-- les zones de maintien (a, e) des deux disques à came (40, 40') peuvent venir s'appuyer simultanément et en sens opposés l'une à l'autre contre un rouleau respectif (34), suite à quoi le support de rouleaux (30) est empêché de tourner vers l'avant et vers l'arrière (figure 2d), et
-- la zone de mouvement (f, h) de l'un des disques à came (40, 40') peut venir s'appuyer contre l'un des rouleaux (34), tandis qu'un autre des rouleaux (34) plonge dans la cavité (c) de l'autre disque à came (40', 40), de sorte que le support de rouleaux (30) est tourné,
caractérisé en ce que :
- les disques à came (40, 40') sont agencés au voisinage l'un de l'autre et leurs saillies (44, 44') peuvent passer l'une devant l'autre en se chevauchant mutuellement, de sorte qu'en coopération avec les rapports d'appui cités :
-- les zones de maintien (a, e) des deux disques à came (40, 40') peuvent venir s'appuyer simultanément et en sens opposés l'une à l'autre contre un seul et même rouleau (34), suite à quoi le support de rouleaux (30) est de nouveau empêché de tourner vers l'avant et vers l'arrière (figure 2a), et
-- la zone de mouvement (f, h) de l'un des disques à came (40, 40') peut venir s'appuyer contre l'un des rouleaux (34), tandis que ce même rouleau (34) plonge dans la cavité (c) de l'autre disque à came (40', 40), de sorte que le support de rouleaux (30) est de nouveau tourné (figures 2b, 2c).

2. Mécanisme pas à pas selon la revendication 1, caractérisé en ce que seul le noyau (42, 42') de chacun des disques à came (40, 40') coïncide, quant à sa largeur axiale et à sa position, approximativement avec les rouleaux (34), tandis que les saillies (44, 44') présentent en direction axiale chacune approximativement la moitié de la largeur et sont en correspondance décalées axialement l'une par rapport à l'autre.

3. Mécanisme pas à pas selon l'une ou l'autre des revendications 1 et 2, caractérisé en ce que chacun des disques à came (40, 40') est symétrique par rapport à un plan médian axial (M), sa zone de maintien (a, e) étant subdivisée en un tronçon de maintien avant (a) et en un tronçon de maintien arrière (e) qui sont reliés l'un à l'autre d'une part par la cavité (c) et d'autre part par la zone de mouvement (f, h).

4. Mécanisme pas à pas selon la revendication 3, caractérisé en ce que les deux disques à came (40, 40') sont identiques et leurs axes de rotation (K, K') présentent la même distance de l'axe de commutation (S).

5. Mécanisme pas à pas selon l'une quelconque des revendications 1 à 4, caractérisé en ce que les axes de rotation (K, K') des deux disques à came (40, 40') sont définis chacun par un tourillon (36) monté excentriquement et réglable en rotation.
